# EUROPEAN PATENT SPECIFICATION

(11) **EP 4 032 819 B1**
(45) Date of publication and mention of the grant of the patent: **23.10.2024**
(21) Application number: 22151540.6
(22) Date of filing: 14.01.2022
(51) Int. Cl.: B65B 9/20, B65B 61/24, B65B 57/04, B65B 61/28, B65G 19/02, B65G 47/82

(54) **INFEED CONVEYOR FOR A FOLDING APPARATUS, FOLDING APPARATUS HAVING AN INFEED CONVEYOR AND PACKAGING MACHINE HAVING A FOLDING APPARATUS**
VORSCHUBFÖRDERER FÜR EINE FALTVORRICHTUNG, FALTVORRICHTUNG MIT EINEM VORSCHUBFÖRDERER UND VERPACKUNGSMASCHINE MIT EINER FALTVORRICHTUNG
CONVOYEUR D'ALIMENTATION POUR UN APPAREIL DE PLIAGE, APPAREIL DE PLIAGE DOTÉ D'UN CONVOYEUR D'ALIMENTATION ET MACHINE D'EMBALLAGE COMPORTANT UN APPAREIL DE PLIAGE

(30) Priority: 22.01.2021 EP 21153014
(43) Date of publication of application: 27.07.2022
(73) Proprietor: Tetra Laval Holdings & Finance S.A., 1009 Pully (CH)
(72) Inventor: VALLI, Andrea, 47121 Forli' (IT); MAZZUCA, Carmine, 41122 Modena (IT); BORTOLOTTI, Edoardo, 41049 Sassuolo (IT)
(74) Representative: Tetra Pak - Patent Attorneys SE

(56) References cited:
- EP-A1- 2 724 790
- EP-A1- 2 955 117
- EP-A2- 2 407 846

## Description

### TECHNICAL FIELD

The present invention relates to an infeed conveyor for a folding apparatus for folding semi-finalized packs of a pourable product, in particular a pourable food product.

Advantageously, the present invention also relates to a folding apparatus for folding semi-finalized packs of a pourable product, in particular a pourable food product, into finalized packages of the pourable product, in particular the pourable food product, and having an infeed conveyor.

Furthermore, the present invention also relates to a packaging machine for packaging a pourable product, in particular a pourable food product, into finalized packages and having a folding apparatus being provided with an infeed conveyor.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines.

There are known packaging machines, which advance a web of packaging material through a sterilization apparatus for sterilizing the web of packaging material and into an isolation chamber in which the sterilized web of packaging material is maintained and advanced. During advancement of the web of packaging material within the isolation chamber, the web of packaging material is folded and sealed longitudinally to form a tube, the tube being further fed along an (vertical) advancing direction. In order to complete the forming operations, the tube is filled with a pourable product, in particular a pourable food product, and is transversally sealed and subsequently cut along equally spaced transversal cross sections within a pack forming unit of the packaging machine during advancement along the advancing direction. Pillow packages are so obtained. These pillow packages define sealed semi-finalized packs having each a central main body and a plurality of flaps protruding from the central main body. In order to obtain the finalized packages, the pillow packages are further formed, and the flaps are folded and sealed onto the respective central main bodies.

A typical packaging machine of this type comprises:
- a forming apparatus configured to form the semi-finalized packs being filled with the pourable product; and
- a folding apparatus configured to receive the semi-finalized packs from the forming apparatus and to form the finalized packages from the semi-finalized packs.

A typical folding apparatus comprises an infeed conveyor, which is configured to receive the semi-finalized packs from the forming apparatus and to feed the semi-finalized packs to a folding unit of the folding apparatus.

The infeed conveyor comprises a carrier for supporting the semi-finalized packs and a belt conveyor carrying a plurality of pushing elements. The belt conveyor is configured to advance the pushing elements along an advancement path such that the pushing elements direct the semi-finalized packs on the carrier along a feeding path when advancing along an operative portion of the advancement path.

The operation of the infeed conveyor must thereby guarantee a correct feeding of the semi-finalized packs to the folding unit. In particular, an operator must setup the infeed conveyor such that the pushing elements advance in a correct manner with respect to the semi-finalized packs. This shall ensure to avoid that the pushing elements are in advance with respect to the semi-finalized packs as such a case may result in the pushing elements getting below the semi-finalized packs possibly provoking a jamming or to avoid that the pushing elements arrive too late, which again may lead to a non-correct folding of the semi-finalized packs.

All this, however, requires the need of well-trained operators and significant time efforts.

Therefore, a need is felt in the sector to further improve the known infeed conveyors.

EP2955117A1 discloses a feeding unit for receiving sealed packs of pourable food products from a forming unit arranged to form said packs and feed said packs to a folding unit arranged to fold said packs so as to obtain folded packages, said feeding unit comprising a feeding conveyor to carry said packs towards said folding unit, and a driving arrangement interacting with said packs so as to pull said packs from said forming unit and push said packs towards said feeding conveyor.

### DISCLOSURE OF INVENTION

It is therefore an object of the present invention to provide in a straightforward and low-cost manner an improved infeed conveyor, which allows to resolve at least one of the above-mentioned inconveniences.

It is a further object of the present invention to provide in a straightforward and low-cost manner an improved folding apparatus, which allows to resolve at least one of the above-mentioned inconveniences.

It is an even further object of the present invention to provide in a straightforward and low-cost manner an improved packaging machine, which allows to resolve at least one of the above-mentioned inconveniences.

According to the present invention, there is provided an infeed conveyor according to the independent claim.

Preferred embodiments are claimed in the dependent claims.

According to the present invention, there is also provided a folding apparatus according to claim 12.

According to the present invention, there is also provided a packaging machine according to claim 13 or 14.

### BRIEF DESCRIPTION OF THE DRAWINGS

A non-limiting embodiment of the present invention will be described by way of example with reference to the accompanying drawings, in which:
Figure 1 is a schematic view of a packaging machine having a folding apparatus provided with an infeed conveyor according to the present invention, with parts removed for clarity;
Figure 2 is a schematic representation of the transformation of a semi-finalized pack into a finalized package, with parts removed for clarity;
Figure 3 is an enlarged perspective view of the folding apparatus of Figure 1, with parts removed for clarity;
Figure 4 is an enlarged perspective view of the infeed conveyor of Figure 1, with parts removed for clarity; and
Figure 5 is a sectioned view of portions of the folding apparatus of Figure 1, with parts removed for clarity.

### BEST MODES FOR CARRYING OUT THE INVENTION

Number 1 indicates as a whole a packaging machine for producing (sealed) finalized packages 2 of a pourable product, in particular a pourable food product such as pasteurized milk, fruit juice, wine, tomato sauce, etc.

Web 4 of packaging material has a multilayer structure (not shown), and comprises at least a layer of fibrous material, such as e.g. a paper or cardboard layer, and at least two layers of heat-seal plastic material, e.g. polyethylene, interposing the layer of fibrous material in between one another. One of these two layers of heat-seal plastic material defines the inner face of finalized package 2 eventually contacting the pourable product.

According to some possible non-limiting embodiments, web 4 may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, web 4 may also comprise a further layer of heat-seal plastic material being interposed between the layer of gas- and light-barrier material and the layer of fibrous material.

In more detail, each finalized package 2 may extend along a longitudinal axis and has a longitudinal seam portion (extending along the respective longitudinal axis) and a pair of transversal sealing bands, in particular a transversal top sealing band and a transversal bottom sealing band. In particular, each finalized package 2 may have a substantially parallelepiped structure.

Furthermore, each finalized package 2 may comprise at least two transversal walls (being transversal to the respective longitudinal axis) and being disposed at opposite sides of finalized package 2 and a plurality of lateral walls extending between the transversal walls.

More specifically, one respective transversal wall of each finalized package 2 defines a bottom wall and the other respective transversal wall defines a top wall. In particular, the bottom wall has a support surface adapted to be placed on a (horizontal) plane, such as e.g. a shelf within a distribution point, and the top wall is opposed to the bottom wall.

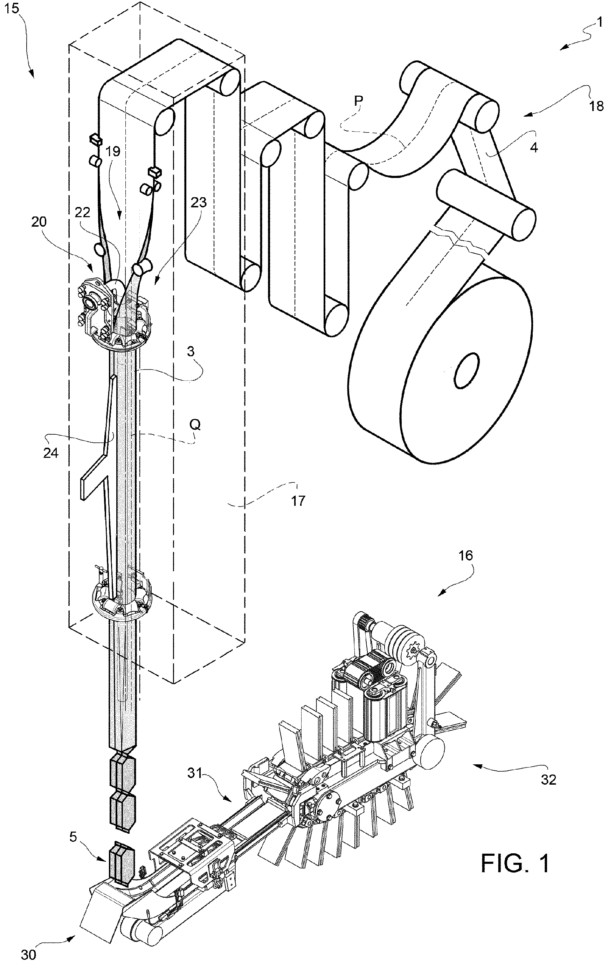

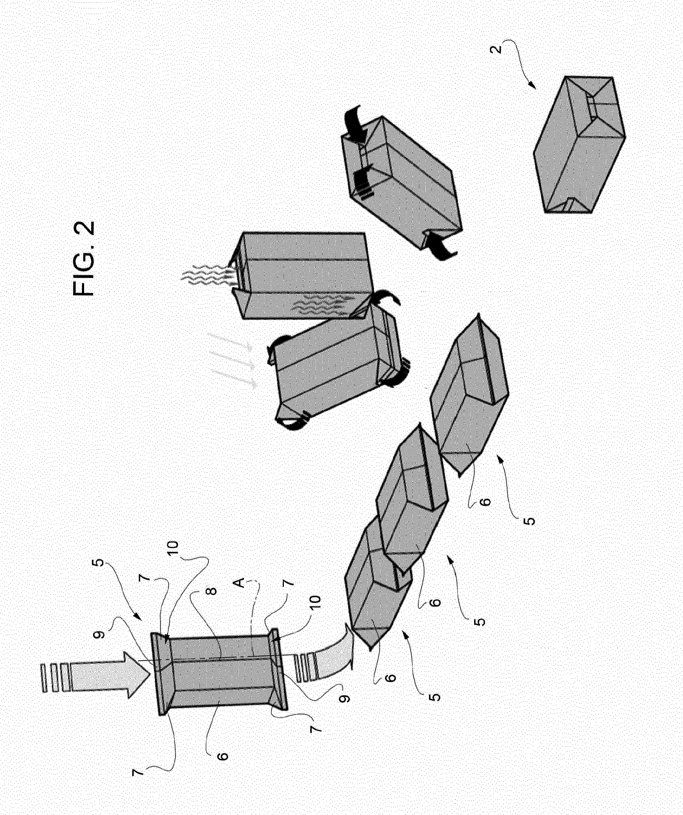

With particular reference to Figures 1 and 2, packaging machine 1 is configured to produce (sealed) semi-finalized packs 5, such as e.g. pillow packs, being filled with the pourable product and to further treat and/or manipulate and/or form semi-finalized packs 5 for obtaining finalized packages 2. In use, at first semi-finalized packs 5 are produced by packaging machine 1, then finalized packages 2 are obtained from semi-finalized packs 5 by packaging machine 1.

More specifically, each semi-finalized pack 5 may comprise at least a central main body 6 and a plurality of flaps 7 protruding from central main body 6.

Additionally, each pack 5 may extend along a respective longitudinal axis A and may comprise a longitudinal sealing band 8 (extending along longitudinal axis A) and two transversal sealing bands 9 disposed at opposite end portions 10 of the respective semi-finalized pack 5.

In particular, each longitudinal sealing band 8 and the respective transversal sealing bands 9 define respectively corresponding longitudinal seam portions and corresponding transversal sealing bands of the respective finalized package 2 (obtained from the respective semi-finalized pack 5).

More specifically, the end portions of each semi-finalized pack 5 may taper from the respective central main body 6 to the respective transversal sealing band 9.

Even more specifically, each end portion 10 has at least two respective flaps 7, in particular at opposite lateral edges.

With particular reference to Figure 1, packaging machine 1 comprises at least:
- a forming apparatus 15 configured to form and/or obtain semi-finalized packs 5 of the pourable product; and
- a folding apparatus 16 configured to receive the semi-finalized packs 5 from forming apparatus 15 and to form finalized packages 2 of the pourable product from semi-finalized packs 5.

In more detail, forming apparatus 15 may comprise:
- an isolation chamber 17 configured to separate an inner (sterile) environment from an outer (hostile) environment;
- a conveying device 18 configured to advance web 4 along a web advancement path P at least to a tube forming station at which web 4 is formed, in use, into tube 3 and for advancing tube 3 along a tube advancement path Q;
- a tube forming and sealing device 19 at least partially arranged within isolation chamber 17 and configured to form and longitudinally seal tube 3 at the tube forming station within isolation chamber 17;

- a filling device 20 for filling tube 3 with the pourable product; and
- a pack forming unit configured to at least form and transversally seal tube 3, in particular to also transversally cut tube 3, in particular during advancement of tube 3 along tube advancement path Q, for obtaining and/or producing semi-finalized packs 5.

In particular, the pack forming unit is arranged downstream of isolation chamber 17 and tube forming and sealing device 19 along tube advancement path Q.

Moreover, tube 3 may extend along a longitudinal axis, in particular having a vertical orientation.

Furthermore, packaging machine 1 may further comprise a sterilization apparatus for sterilizing at least a portion of web 4 at a sterilization station arranged upstream of the tube forming station along web advancement path P.

In more detail, filling device 20 may comprise at least a filling pipe 22 being in fluid connection or being controllable to be in fluid connection with a pourable product storage tank (not shown and known as such) and being, in use, partially placed within tube 3 for feeding the pourable product into the, in use, advancing tube 3.

More specifically, tube forming and sealing device 19 may comprise at least a tube forming assembly 23 configured to form tube 3 from web 4, in particular by overlapping the respective opposite lateral edges of web 4, and at least a sealing head 24 configured to longitudinally seal tube 3, in particular along the portion of tube 3 obtained by the overlapping of the opposite lateral edges of web 4.

Even more specifically, tube forming assembly 23 and sealing head 24 are arranged within isolation chamber 17.

According to some preferred non-limiting embodiments, the pack forming unit comprises a plurality of pairs of at least one operative assembly (not shown and known as such) and at least one respective counter-operative assembly (not shown and known as such); and
- a conveying unit (not shown and known as such) configured to advance the operative assemblies and the respective counter-operative assemblies along respective conveying paths.

More specifically, each operative assembly may be configured to cooperate, in use, with the respective counter-operative assembly of the respective pair for forming, transversally sealing, and in particular also transversally cutting, tube 3 for obtaining one respective semi-finalized pack 5, in particular when, in use, advancing along a respective operative portion of the respective conveying path.

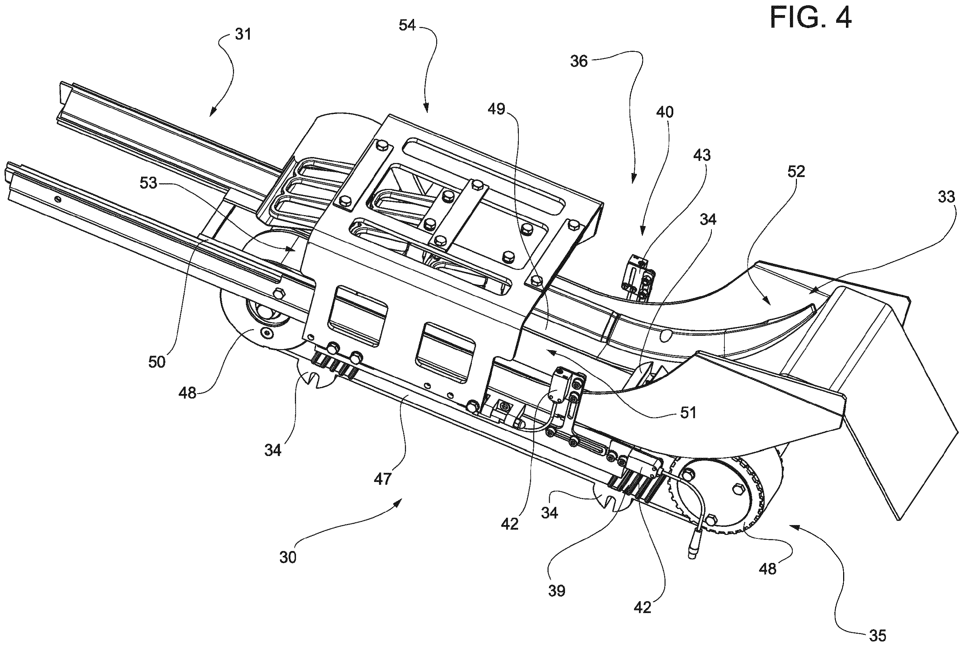

With particular reference to Figures 1 to 5, folding apparatus 15 comprises at least:
- an infeed conveyor 30 configured to receive the semi-finalized packs 5, in particular from forming apparatus 15, even more particular the pack forming unit, and to feed semi-finalized packs 5 to a transfer station 31; and
- a folding unit 32 configured to receive the semi-finalized packs 5 from infeed conveyor 30 at transfer station 31 and to treat and/or manipulate semi-finalized packs 5 so as to obtain finalized packages 2 from the semi-finalized packs 5.

With particular reference to Figures 1 to 5, infeed conveyor 30 comprises at least:
- a carrier 33 configured to carry semi-finalized packs 5;
- one or more pushing elements 34, in the specific embodiment disclosed four, configured to engage respective semi-finalized packs 5; and
- a conveying device 35 configured to advance pushing elements 33 along an (endless) advancement path R and such that pushing elements 33 guide, in use, semi-finished packs 5 on carrier 33 along a feeding path S (and to transfer station 31) when, in use, advancing along an operative portion R1 of advancement path R.

In particular, each pushing element 34 is configured to abut against one respective semi-finalized pack 5 when advancing, in use, along operative portion R1, even more particular for feeding the respective semi-finalized pack 5 to transfer station 31.

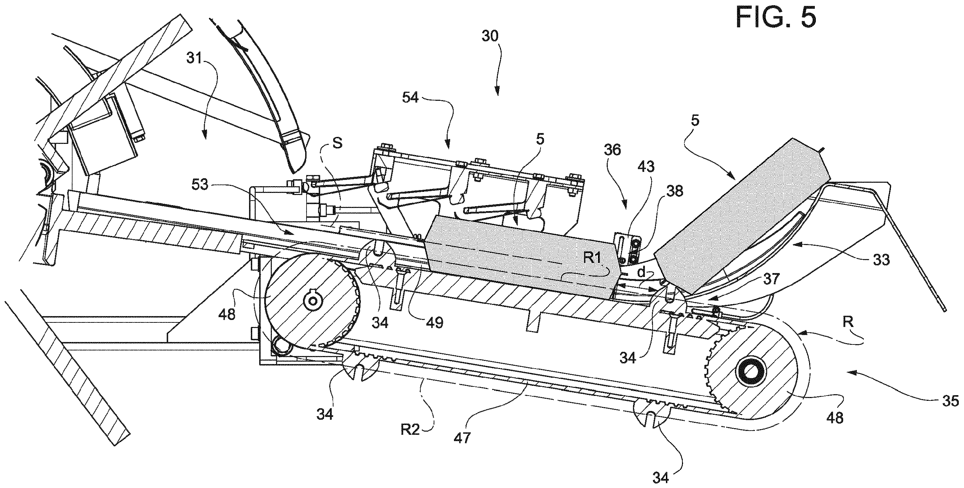

Additionally, infeed conveyor 30 also comprises a distance detection device 36 for measuring a distance d (see Figure 5) between pushing elements 34 and the respective semi-finalized packs 5. In particular, distance detection device 36 allows to determine distance d between each pushing element 34 and the respective semi-finalized pack 5 in order to determine whether distance d lies within a determined distance range (which guarantees correct feeding of semi-finalized packs 5 to transfer station 31 and/or folding unit 32).

In more detail, conveying device 35 may also be configured to advance pushing elements 34 also along a return portion R2 for directing pushing elements 34 back to operative portion R1.

More specifically, conveying device 35 is configured to repeatedly advance pushing elements 34 along advancement path R, in particular operation portion R1 and return portion R2. Furthermore, each pushing element 34 is configured to engage with one respective semi-finalized pack 5 when advancing along operative portion R1.

Preferentially, distance detection device 36 may be configured to determine distance d of each pushing element 34 from one respective semi-finalized pack 5 prior to engaging, in use, with the respective semi-finalized pack 5. In other words, distance detection device 36 is configured to determine distance d between pushing elements 34 and the respective semi-finalized packs 5 prior to engagement of pushing elements 34 with the respective semi-finalized packs 5.

It should be noted that distance d may be expressed as a distance between a respective engagement portion (which abuts, in use, against semi-finalized packs 5) of pushing elements 5 and a respective trailing portion (against which the respective engagement portion abuts) of the respective semi-finalized packs 5.

According to invention, distance detection device 36 is configured to determine distance d between pushing elements 34 and the respective semi-finalized packs 5 when, in use, the respective pushing elements 34 are at and/or pass a reference position 37. In particular, distance detection device 36 is configured to determine a first time when pushing elements 34 are at and/or pass reference position 37.

Distance detection device 36 is configured to determine a passage, in particular a second time associated to the passage, of semi-finalized packs 5 at a reference position 38.

Furthermore, distance detection device 36 is configured to determine distance d of pushing elements 34 from the respective semi-finalized packs 5 in dependence of the first time and the second time.

Preferentially, by determining distance d it is possible to also determine the time of impact when pushing elements 34 engage the respective semi-finalized packs 5.

According to the embodiment disclosed, reference position 38 is distinct from reference position 37. Alternatively, reference position 38 and reference position 37 could coincide.

In more detail, distance detection device 36 may comprise a sensor group 39 (only partially shown) configured to detect pushing elements 34 being at and/or passing reference position 37 and a sensor group 40 configured to detect semi-finalized packs 5 being at and/or passing reference position 38. In particular, the respective positions of sensor group 39 and sensor group 40 define, respectively, reference position 37 and reference position 38.

More specifically, each one of sensor group 39 and sensor group 40 may comprise a respective photocell arrangement.

Even more specifically, each photocell arrangement may comprise a light-emitting element 42 and a light-receiving element 43 spaced apart from one another, in particular defining in combination a photo-electric barrier.

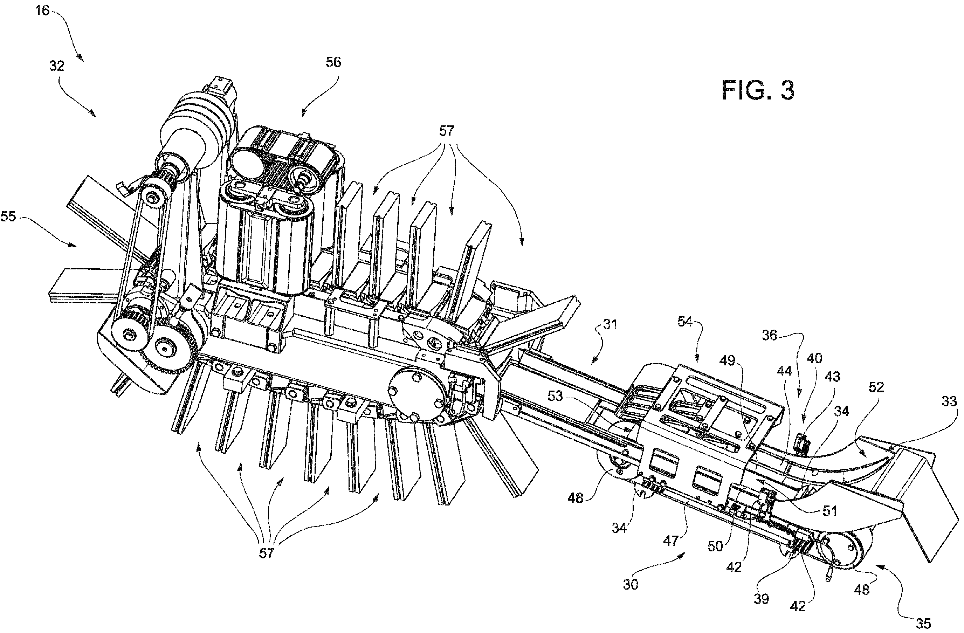

With particular reference to Figures 3 to 5, conveying device 35 may comprise a conveyor belt 47 carrying pushing elements 34, in particular being equally spaced along conveyor belt 47, and being configured to advance pushing elements 34 along advancement path R. In particular, pushing elements 34 are integral to conveyor belt 47.

Moreover, conveying device 35 also comprises at least a pair of pulleys 48 and at least one actuator operatively coupled to at least one of pulleys 48 for controlling advancement of conveyor belt 47.

Furthermore, the respective light-emitting element 42 and the respective light-receiving element 43 of sensor group are arranged adjacent to conveyor belt 47 and interpose a portion of conveyor belt 47 between one another.

In more detail, carrier 33 may comprise a first rail 49 and a second rail 50 spaced apparat from one another and defining an interspace 51 between one another. Each one of first rail 49 and second rail 50 is configured to carry a respective portion of semi-finalized packs 5. In particular, pushing elements 34 are configured to advance within interspace 51 when advancing, in use, along operative portion R1.

More specifically, the respective light-emitting element 42 and the respective light-receiving element 43 of sensor group 40 interpose a portion of carrier 33 between one another.

Furthermore, one of light-emitting element 42 and light-receiving element 43 of sensor group 40 is arranged adjacent to second rail 50, in the specific case shown light-emitting element 42, and the other one of light-emitting element 42 and light-receiving element 43 of sensor group 40 is arranged adjacent to first rail 49, in the specific case shown light-emitting element 43.

In further detail, carrier 33 may comprise a (curved) receiving portion 52 for receiving semi-finalized packs 5 from forming apparatus 15, in particular the pack forming unit, and a guiding portion 53 downstream of receiving portion 52. In particular, semi-finalized packs 5 advance, in use, along (at least a portion of) guiding portion 53 when advancing along feeding path S.

In particular, infeed conveyor 30 is designed such that at first semi-finalized packs 5 arriving from forming apparatus 15, in particular the pack forming unit, passively advance (i.e. without any actuator or conveyor, but only relying on the kinetic energy resulting from operation of forming apparatus 15, in particular pack forming unit), and then actively advance due to the pushing action of pushing elements 34.

Preferentially, first rail 49 and second rail 50 comprise respective sections of receiving portion 52 and guiding portion 53. In particular, in use, semi-finalized packs 5 passively advance along receiving portion 52.

Furthermore, infeed conveyor 30 may also comprise a breaking unit 54 configured to decelerate, in particular to gradually decelerate, the semi-finalized packs 5 on guiding portion 53. In particular, breaking unit 54 is configured to (gradually) decelerate the passively advancing semi-finalized packs 5.

With particular reference to Figures 1 to 5, folding unit 32 is configured to manipulate and/or process packs 5 so as to form and/or shape at least the respective central main bodies 6 (into the desired form and/or shape of the respective finalized package 2) and to control and/or determine the relative position of flaps 7 with respect to the respective central main body 6.

Preferentially but not necessarily, folding unit 32 is configured to seal each flap 7 onto the respective central main body 6.

In more detail, folding unit 32 may comprise at least:
- a conveying assembly 55 configured to advance semi-finalized packs 5 along a final advancement path; and
- at least one treatment unit 56 configured to form and/or shape each central main body 6 and/or for folding and sealing flaps 7 onto the respective central main body 6 during the advancement of semi-finalized packs 5 along the final advancement path.

More specifically, conveying assembly 55 comprises a plurality of retaining pockets 57 configured to retain at least one respective semi-finalized pack 5 during advancement of the respective semi-finalized pack 5 along the final advancement path.

According to some possible non-limiting embodiments, packaging machine 1 may comprise a control unit configured to control operation of folding apparatus 18, infeed conveyor 30 and/or folding unit 32 in dependence of distance d.

According to some possible non-limiting embodiments, infeed conveyor 30 is controlled and/or controllable, in particular by means of the control unit, such that distance d corresponds to a (predetermined) distance and/or lies within a (predetermined) distance range.

In use, packaging machine 1 forms finalized packages 2 filled with the pourable product.

In particular, the method of forming packages 2 comprises the main steps of:
- forming semi-finalized packs 5 by means of forming apparatus 15; and
- folding semi-finalized packs 5 into finalized packages 2 by operation of folding apparatus 16.

In more detail, the main step of forming packs 5, comprises at least the steps of:
- advancing web 4 along advancement path P, in particular by operation of conveying device 18;
- folding web 4, in particular within isolation chamber 17, by means of tube forming and sealing device 19, in particular tube forming assembly 23, into tube 3;

- longitudinally sealing tube 3, in particular within isolation chamber 17, by operation of tube forming and sealing device 19, in particular sealing head 24;
- filling tube 3 with the pourable product by operation of filling device 20, in particular filing pipe 22;
- advancing tube 3 along tube advancement path Q by operation of conveying device 18 and/or the pack forming unit; and
- obtaining semi-finalized packs 5 from tube 3 by forming, transversally sealing and transversally cutting tube 3 by operation of the pack forming unit and during advancement of tube 3 along tube advancement path Q.

Moreover, the step of forming may also comprise the step of sterilizing web 4 at the sterilization station.

In more detail, the step of folding semi-finalized packs 5 comprises the sub-steps of:
- feeding semi-finalized packs 5 to folding unit 32 by operation of infeed conveyor 30; and
- final folding semi-finalized packs 5 by operation of folding unit 32.

More specifically, during the sub-step of feeding conveying device 35 advances pushing elements 34 along advancement path R such that pushing elements 34 engage the respective semi-finalized packs 5 when advancing along operative portion R1 and so as to push the respective semi-finalized packs 5 to transfer station 31 and/or folding unit 32.

Furthermore, during the step of feeding, also the distance d between each pushing element 34 and the respective semi-finalized pack 5 is determined by distance detection device 36. In particular, the respective second time of the passage of the respective semi-finalized pack 5 at reference position 38 and the respective first time of the passage of the respective pushing element 34 at reference position 37 are determined, in particular by the respective photocell arrangement, and the distance d is determined in dependence of the respective first time and the respective second time.

Additionally, during the step of feeding, the semi-finalized packs 5 are received from forming apparatus 15, in particular the pack forming unit. In particular, at first semi-finalized packs 5 passively advance along at least receiving portion 52 and then semi-finalized packs 5 are actively fed to transfer station 31 and/or folding unit 32 due to the interaction with pushing elements 34 and their advancement along operative portion R1.

Preferentially, during the step of feeding, breaking unit 54 decelerates, in particular gradually decelerates, the passively advancing semi-finalized packs 5 prior to being engaged by the respective pushing elements 34.

In more detail, during the step of final folding, the respective central main bodies 6 are formed and/or the respective flaps 7 are folded and sealed onto the respective central main bodies 6 so as to form the finalized packages 2 from semi-finalized packs 5.

More specifically, during the step of final folding, semi-finalized packs 5 advance along the final advancement path (by means of operation of conveying assembly 55) and are treated during advancement along the final advancement path (by operation of treatment unit 56) for obtaining finalized packages 2. In particular, treatment unit 56 forms and/or shapes the respective central main bodies 6 and/or folds and seals the respective flaps 7 onto the respective central main bodies 6.

Furthermore, during the step of final folding, semi-finalized packs 5 are inserted into retaining pockets 57 at transfer station 31.

According to some possible non-limiting embodiments, the operation of forming apparatus 15 and/or infeed conveyor 30 and/or folding unit 32 is controlled in function of the distance d.

According to some possible non-limiting embodiments, infeed conveyor 30 is controlled, in particular by means of the control unit, such that distance d corresponds to a predetermined distance and/or lies within a predetermined distance range.

The advantages of infeed conveyor 30 according to the present invention will be clear from the foregoing description.

In particular, by providing for distance detection device 36 it is possible to control and/or monitor the distance d between pushing elements 34 and the respective semi-finalized packs 5. In this way, it is possible to monitor whether distance d resides in a desired range. In this way, it is possible to ensure that pushing elements 34 correctly engage with semi-finalized packs 5 so as to guarantee a correct feeding of semi-finalized packs 5 to folding unit 32. Furthermore, in this way, it is possible to avoid that semi-finalized packs 5 are fed to folding unit 32 in the wrong moment. As well, any jamming of semi-finalized packs 5 is avoided.

Additionally, by providing for distance detection device 36 the setting-up of infeed conveyor 30 is facilitated.

Clearly, changes may be made to packaging machine 1 as described herein without, however, departing from the scope of protection as defined in the accompanying claims.

## Claims

1. Infeed conveyor (30) for a folding apparatus (19) for folding semi-finalized packs (5) containing a pourable product, the infeed conveyor (30) being configured to receive the semi-finalized packs (5) and to transfer the semi-finalized packs (5) to a folding unit (32) of the folding apparatus (19);
the infeed conveyor (30) comprises at least:
- one or more pushing elements (34);
- a conveying device (35) for advancing the pushing elements (34) along an advancement path (R); and
- a carrier (33) for the semi-finalized packs (5);
wherein each pushing element (34) is configured to engage one respective semi-finalized pack (5) and to guide the semi-finalized pack (5) on the carrier (33) along a feeding path (S) when, in use, advancing along an operative portion (R1) of the advancement path (R);
**characterized in that** the infeed conveyor (30) further comprises a distance detection device (36) for measuring a distance (d) between the pushing elements (34) and the respective semi-finalized packs (5);
wherein the distance detection device (36) is configured to determine the passage of the pushing elements (34) at a first reference position (37) and the passage of the semi-finalized packs (5) at a second reference position (38).

2. Infeed conveyor according to claim 1, wherein the distance detection device (36) is configured to determine the distance (d) between the pushing elements (34) and the respective semi-finalized packs (5) prior to engagement of the pushing elements (34) with the respective semi-finalized packs (5).

3. Infeed conveyor according to claim 1 or 2, wherein the distance detection device (36) is configured to determine the distance (d) between the pushing elements (34) and the respective semi-finalized packs (5) when, in use, the pushing elements (34) is at the first reference position (37).

4. Infeed conveyor according to any one of the preceding claims, wherein the first reference position (37) is distinct from the second reference position (38) or the first reference position (37) and the second reference position (38) coincide.

5. Infeed conveyor according to any one of the preceding claims, wherein the distance detection device (36) comprises a first sensor group (39) configured to determine the passage of the pushing elements (34) at the first reference position (37) and a second sensor group (40) configured to determine the passage of the semi-finalized packs (5) at the second reference position (38).

6. Infeed conveyor according to claim 5, wherein each one of the first sensor group (39) and the second sensor group (40) comprises a respective photocell arrangement.

7. Infeed conveyor according to any one of the preceding claims, wherein the carrier (33) comprises a first rail (49) and a second rail (50) spaced apparat from one another and defining an interspace (51) between one another;
wherein the pushing elements (34) are configured to advance within the interspace (51) when advancing, in use, along the operative portion (R1).

8. Infeed conveyor according to any one of the preceding claims, wherein the conveyor device (35) is configured to advance the pushing elements (34) along an endless advancement path (R) having the operative portion (R1) and a return portion (R2) for directing the pushing elements (34) back to the operative portion (R1).

9. Infeed conveyor according to any one of the preceding claims, wherein the conveying device (35) comprises a conveyor belt (47) carrying the pushing elements (34) and configured to advance the pushing elements (34) along the advancement path (R).

10. Infeed conveyor according to claim 9, wherein the pushing elements (34) are equally spaced along the conveyor belt (47).

11. Infeed conveyor according to any one of the preceding claims, wherein the infeed conveyor (30) is controllable such that the distance (d) corresponds to a predetermined distance and/or that the distance (d) lies within a predetermined distance range.

12. Folding apparatus (16) for folding semi-finalized packs (5) filled with a pourable product into finalized packages (2) comprising at least:
- an infeed conveyor (30) according to any one of the preceding claims; and
- a folding unit (32) configured to receive the semi-finalized packs (5) from the infeed conveyor (30) and to treat and/or manipulate the semi-finalized packs (5) so as to obtain finalized packages (2) from the semi-finalized packs (5).

13. Packaging machine (1) for producing finalized packages (2) of a pourable product comprising at least:
- a forming apparatus (15) configured to form semi-finalized packs (5) of the pourable product; and
- a folding apparatus (16) according to claim 12 for forming the finalized packages (2) from the semi-finalized packs (5).

14. Packaging machine according to claim 13, and further comprising a control unit configured to control operation of the forming apparatus (15) and/or the infeed conveyor (30) and/or the folding unit (32) in dependence of the distance (d).

## Patentansprüche

1. Vorschubförderer (30) für eine Falteinrichtung (19) zum Falten von halb fertiggestellten Verpackungen (5), die ein gießbares Produkt enthalten, wobei der Vorschubförderer (30) dazu ausgelegt ist, die halb fertiggestellten Verpackungen (5) zu empfangen und die halb fertiggestellten Verpackungen (5) an eine Falteinheit (32) der Falteinrichtung (19) zu übergeben;
wobei der Vorschubförderer (30) umfasst mindestens:
- ein oder mehrere Schubelemente (34);
- eine Fördervorrichtung (35) zum Vorrücken der Schubelemente (34) entlang eines Vorrückpfades (R) und
- einen Träger (33) für die halb fertiggestellten Verpackungen (5);
wobei jedes Schubelement (34) dazu ausgelegt ist, in eine jeweilige halb fertiggestellte Verpackung (5) einzugreifen und die halb fertiggestellte Verpackung (5) auf dem Träger (33) entlang eines Vorschubpfades (S) zu führen, wenn im Gebrauch entlang eines operativen Abschnitts (R1) des Vorrückpfades (R) vorgerückt wird;
**dadurch gekennzeichnet, dass** der Vorschubförderer (30) zum Messen eines Abstands (d) zwischen den Schubelementen (34) und den jeweiligen halb fertiggestellten Verpackungen (5) ferner eine Abstandsdetektionsvorrichtung (36) umfasst;
wobei die Abstandsdetektionsvorrichtung (36) dazu ausgelegt ist, den Durchlauf der Schubelemente (34) an einer ersten Referenzposition (37) und den Durchlauf der halb fertiggestellten Verpackungen (5) an einer zweiten Referenzposition (38) zu bestimmen.

2. Vorschubförderer nach Anspruch 1, wobei die Abstandsdetektionsvorrichtung (36) dazu ausgelegt ist, den Abstand (d) zwischen den Schubelementen (34) und den jeweiligen halb fertiggestellten Verpackungen (5) vor dem Eingriff in die Schubelemente (34) in die jeweiligen halb fertiggestellten Verpackungen (5) zu bestimmen.

3. Vorschubförderer nach Anspruch 1 oder 2, wobei die Abstandsdetektionsvorrichtung (36) dazu ausgelegt ist, den Abstand (d) zwischen den Schubelementen (34) und den jeweiligen halb fertiggestellten Verpackungen (5) zu bestimmen, wenn sich im Gebrauch die Schubelemente (34) an der ersten Referenzposition (37) befinden.

4. Vorschubförderer nach einem der vorhergehenden Ansprüche, wobei sich die erste Referenzposition (37) von der zweiten Referenzposition (38) unterscheidet oder die erste Referenzposition (37) und die zweite Referenzposition (38) zusammenfallen.

5. Vorschubförderer nach einem der vorhergehenden Ansprüche, wobei die Abstandsdetektionsvorrichtung (36) eine erste Sensorgruppe (39), die dazu ausgelegt ist, den Durchlauf der Schubelemente (34) an der ersten Referenzposition (37) zu bestimmen, und eine zweite Sensorgruppe (40), die dazu ausgelegt ist, den Durchlauf der halb fertiggestellten Verpackungen (5) an der zweiten Referenzposition (38) zu bestimmen, umfasst.

6. Vorschubförderer nach Anspruch 5, wobei jede der ersten Sensorgruppe (39) und der zweiten Sensorgruppe (40) eine jeweilige Fotozellenanordnung umfasst.

7. Vorschubförderer nach einem der vorhergehenden Ansprüche, wobei der Träger (33) eine erste Schiene (49) und eine zweite Schiene (50) umfasst, die voneinander beabstandet sind und einen Zwischenraum (51) zwischeneinander definieren;
wobei die Schubelemente (34) dazu ausgelegt sind, im Zwischenraum (51) vorzurücken, wenn sie im Gebrauch entlang des operativen Abschnitts (R1) vorrücken.

8. Vorschubförderer nach einem der vorhergehenden Ansprüche, wobei die Fördervorrichtung (35) dazu ausgelegt ist, die Schubelemente (34) entlang eines endlosen Vorrückpfades (R) vorzurücken, der den operativen Abschnitt (R1) und einen Rücklaufabschnitt (R2) zum Leiten der Vorschubelemente (34) zurück zum operativen Abschnitt (R1) aufweist.

9. Vorschubförderer nach einem der vorhergehenden Ansprüche, wobei die Fördervorrichtung (35) einen Fördergurt (47) umfasst, der die Schubelemente (34) trägt und dazu ausgelegt ist, die Schubelemente (34) entlang des Vorrückpfades (R) vorzurücken.

10. Vorschubförderer nach Anspruch 9, wobei die Schubelemente (34) entlang des Fördergurts (47) gleichmäßig beabstandet sind.

11. Vorschubförderer nach einem der vorhergehenden Ansprüche, wobei der Vorschubförderer (30) derart steuerbar ist, dass der Abstand (d) einem vorbestimmten Abstand entspricht und/oder dass der Abstand (d) innerhalb eines vorbestimmten Abstandsbereichs liegt.

12. Falteinrichtung (16) zum Falten von halb fertiggestellten Verpackungen (5), die mit einem gießbaren Produkt gefüllt sind, in fertiggestellte Verpackungen (2), die mindestens Folgendes umfasst:
- einen Vorschubförderer (30) nach einem der vorhergehenden Ansprüche und
- eine Falteinheit (32), die dazu ausgelegt ist, die halb fertiggestellten Verpackungen (5) vom Vorschubförderer (30) zu empfangen und die halb fertiggestellten Verpackungen (5) zu behandeln und/oder zu manipulieren, um fertiggestellte Verpackungen (2) von den halb fertiggestellten Verpackungen (5) zu erhalten.

13. Verpackungsmaschine (1) zum Produzieren von fertiggestellten Verpackungen (2) eines gießbaren Produkts, die mindestens Folgendes umfasst:
- eine Bildungseinrichtung (15), die dazu ausgelegt ist, halb fertiggestellte Verpackungen (5) des gießbaren Produkts zu bilden; und
- eine Falteinrichtung (16) nach Anspruch 12 zum Bilden der fertiggestellten Verpackungen (2) aus den halb fertiggestellten Verpackungen (5).

14. Verpackungsmaschine nach Anspruch 13, die ferner eine Steuereinheit umfasst, die dazu ausgelegt ist, einen Betrieb der Falteinrichtung (15) und/oder des Vorschubförderers (30) und/oder der Falteinheit (32) in Abhängigkeit vom Abstand (d) zu steuern.

## Revendications

1. Transporteur d'alimentation (30) pour un appareil de pliage (19) pour le pliage d'emballages semi-finalisés (5) contenant un produit versable, le transporteur d'alimentation (30) étant configuré pour recevoir les emballages semi-finalisés (5) et pour transférer les emballages semi-finalisés (5) vers une unité de pliage (32) de l'appareil de pliage (19) ;
le transporteur d'alimentation (30) comprenant au moins :
- un ou plusieurs éléments de poussée (34) ;
- un dispositif transporteur (35) pour faire avancer les éléments de poussée (34) le long d'un chemin d'avancement (R) ; et
- un support (33) pour les emballages semi-finalisés (5) ;
chaque élément de poussée (34) étant configuré pour venir en contact avec un emballage semi-finalisé (5) respectif et pour guider l'emballage semi-finalisé (5) sur le support (33) le long d'un chemin d'alimentation (S) lorsqu'il avance, lors de l'utilisation, le long d'une partie opérationnelle (R1) du chemin d'avancement (R) ;
le transporteur d'alimentation (30) étant **caractérisé en ce qu'**il comprend en outre un dispositif de détection de distance (36) pour mesurer une distance (d) entre les éléments de poussée (34) et les emballages semi-finalisés (5) respectifs ;
le dispositif de détection de distance (36) étant configuré pour déterminer le passage des éléments de poussée (34) au niveau d'une première position de référence (37) et le passage des emballages semi-finalisés (5) au niveau d'une seconde position de référence (38).

2. Transporteur d'alimentation selon la revendication 1, dans lequel le dispositif de détection de distance (36) est configuré pour déterminer la distance (d) entre les éléments de poussée (34) et les emballages semi-finalisés (5) respectifs avant la venue en contact des éléments de poussée (34) avec les emballages semi-finalisés (5) respectifs.

3. Transporteur d'alimentation selon la revendication 1 ou 2, dans lequel le dispositif de détection de distance (36) est configuré pour déterminer la distance (d) entre les éléments de poussée (34) et les emballages semi-finalisés (5) respectifs lorsque les éléments de poussée (34), lors de l'utilisation, sont au niveau de la première position de référence (37).

4. Transporteur d'alimentation selon l'une quelconque des revendications précédentes, dans lequel la première position de référence (37) est distincte de la seconde position de référence (38) ou la première position de référence (37) et la seconde position de référence (38) coïncident.

5. Transporteur d'alimentation selon l'une quelconque des revendications précédentes, dans lequel le dispositif de détection de distance (36) comprend un premier groupe de capteurs (39) configurés pour déterminer le passage des éléments de poussée (34) au niveau de la première position de référence (37) et un second groupe de capteurs (40) configurés pour déterminer le passage des emballages semi-finalisés (5) au niveau de la seconde position de référence (38).

6. Transporteur d'alimentation selon la revendication 5, dans lequel chaque capteur du premier groupe de capteurs (39) et du second groupe de capteurs (40) comprend un agencement respectif de cellules photoélectriques.

7. Transporteur d'alimentation selon l'une quelconque des revendications précédentes, dans lequel le support (33) comprend un premier rail (49) et un second rail (50) espacés l'un de l'autre et définissant un espace intermédiaire (51) entre eux ;
les éléments de poussée (34) étant configurés pour avancer dans l'espace intermédiaire (51) lorsqu'ils avancent, lors de l'utilisation, le long de la partie opérationnelle (R1).

8. Transporteur d'alimentation selon l'une quelconque des revendications précédentes, dans lequel le dispositif transporteur (35) est configuré pour faire avancer les éléments de poussée (34) le long d'un chemin d'avancement sans fin (R) ayant la partie opérationnelle (R1) et une partie de retour (R2) pour rediriger les éléments de poussée (34) vers la partie opérationnelle (R1).

9. Transporteur d'alimentation selon l'une quelconque des revendications précédentes, dans lequel le dispositif transporteur (35) comprend une bande transporteuse (47) transportant les éléments de poussée (34) et configurée pour faire avancer les éléments de poussée (34) le long du chemin d'avancement (R).

10. Transporteur d'alimentation selon la revendication 9, dans lequel les éléments de poussée (34) sont équidistants le long de la bande transporteuse (47).

11. Transporteur d'alimentation selon l'une quelconque des revendications précédentes, le transporteur d'alimentation (30) pouvant être commandé de telle sorte que la distance (d) corresponde à une distance prédéterminée et/ou que la distance (d) se situe dans une plage de distance prédéterminée.

12. Appareil de pliage (16) pour plier des emballages semi-finalisés (5), remplis d'un produit versable, en emballages finalisés (2), l'appareil de pliage comprenant au moins :
- un transporteur d'alimentation (30) selon l'une quelconque des revendications précédentes ; et
- une unité de pliage (32) configurée pour recevoir les emballages semi-finalisés (5) en provenance du transporteur d'alimentation (30) et pour traiter et/ou manipuler les emballages semi-finalisés (5) de manière à obtenir des emballages finalisés (2) à partir des emballages semi-finalisés (5).

13. Machine d'emballage (1) pour produire des emballages finalisés (2) d'un produit versable, la machine d'emballage comprenant au moins :
- un appareil de formage (15) configuré pour former des emballages semi-finalisés (5) du produit versable ; et
- un appareil de pliage (16) selon la revendication 12 pour former les emballages finalisés (2) à partir des emballages semi-finalisés (5).

14. Machine d'emballage selon la revendication 13, comprenant en outre une unité de commande configurée pour commander le fonctionnement de l'appareil de formage (15) et/ou du transporteur d'alimentation (30) et/ou de l'unité de pliage (32) en fonction de la distance (d).
